# EUROPEAN PATENT APPLICATION

(11) **EP 2 221 793 A1**
(43) Date of publication of application: **25.08.2010**
(21) Application number: 10151345.5
(22) Date of filing: 21.01.2010
(51) Int. Cl.: G09F 3/02

(54) **Durable washable label having a visible diffraction grating pattern**

(30) Priority: 19.02.2009 US 389344
(71) Applicant: JDS Uniphase Corporation, Milpitas, CA 95035 (US)
(72) Inventor: O'Boyle, Lily, Cream Ridge, NJ 08514 (US); Guirguis, Gamil, East Brunswick, NJ 08816 (US); Teitelbaum, Neil, Ottawa Ontario K1S 5C4 (CA)
(74) Representative: Harrison Goddard Foote

(57) **Abstract**

This invention provides an improved and novel thin and pliable holographic fabric label that possesses durability, high intensity of holographic diffraction, laundering resistance, minimal alteration and degradation to the fabric and the label through extended use, and the ability to be cost-effectively mass produced is described. High bond is formed at multiple inter polymer interfaces and reflective diffractive layer is protected within the construction, superior durability to repetitious laundering, dry clean cycle and mechanical wear with long lasting diffracting effect and visual authentication property is realized.

## Description

### FIELD OF THE INVENTION

This invention relates generally to labels having a visible diffraction grating pattern which exhibits diffractive effects.

### BACKGROUND OF THE INVENTION

The present invention relates to improvements of holographic labels as are typically used to authenticate, decorate, build brand identity, and otherwise add value to apparel and other items of personal clothing and gear. For example, retail distributors are often required by brand licensors to display identifying tags or labels that assure the consumer that the product is "officially licensed". Such brands could be the names and logos of sports teams, celebrity designers, musicians, and so forth. The perceived value of an article so branded is higher than an otherwise identical, but non-branded article. Higher perceived value supports higher retail price, and hence a market for counterfeiting is created. To ensure the authenticity of an "officially licensed" product, brand owners may insist on incorporating anti-counterfeiting barriers into their goods. One widely recognized barrier to counterfeiting is the hologram. The concept of brand protection via application of holographic labels is well known and has been employed extensively by major manufacturers of clothing and personal apparel brands. Typically, the holographic labels that are used in this capacity are applied to the articles as pressure sensitive labels or hang tags. Both these techniques have limited effectiveness.

A pressure sensitive label is typically constructed of a polymer film, such as PET for example, with an embossable coating applied to one side. The embossable coating is brought into contact with the face of a surface-relief holographic stamper, thereby receiving a precise imprint of this holographic surface-relief pattern. The imprinted side is then typically completely coated with a light-reflecting layer, such as aluminum, and a pressure-sensitive adhesive coating is finally applied. The polymer substrate, mated to a release liner, is die cut and wound into a roll of ready-to-dispense labels. These labels are typically applied directly to the apparel or item need to be protected.

Alternatively, a hangtag is commonly constructed of a medium-weight board stock and is affixed to apparel with a nylon tie. The hangtag may serve as a base for a pressure sensitive holographic label that will cover a small or large area thereof, depending upon design and functionality considerations. Ultimately, both methods of application are considered temporary and are typically discarded by the consumer once the apparel has been purchased. Additionally, the holographic pressure-sensitive label construction does not withstand the normal use and/or washing cycles the apparel is subjected to. If the label or hang tag were left attached, by accident for example, they would soon detach or otherwise be destroyed. What is needed is a holographic label that will 1) convey authenticity to the consumer, 2) discourage counterfeiting, 3) add visual appeal, and 4) continue in these capacities long after the original purchase of the apparel.

### PRIOR ART

There has been considerable work done in the area of holographic ornamentation of textiles, apparel, and the like. A brief summary of prior art follows.

U.S. Pat. Nos. 4,838,965; 5,281,499; 5,314,767 and 5,455,129 describe techniques of attaching pre-made holographic substrates to fabrics using an adhesive scrim and utilizing various schemes of sealing the edges of the holographic substrate. In one embodiment, thermoplastic screen-printing ink applied to the area that receives the hologram serves to seal the edges of the holographic substrate against moisture penetration. In another, the hologram edges are sealed independently of application to the fabric using heat and pressure. In yet another, the hologram edges are sealed using a hot iron tip or laser cutting device. However, application techniques are limiting in several ways. The use of multiple substrate layers (i.e. the hologram base substrate layer, the adhesive scrim layer, the ink/adhesive layer) with the requirement that the adhesive agent(s) be applied in amounts sufficient to swell beyond and seal the edges of the holographic substrate adds overall thickness to the final product, undesirably increasing the bulk and local rigidity of the garment. The result is a poorly integrated product with a holographic element that appears to be an add-on or afterthought. Second, the hand of the fabric is significantly altered by the increase of fabric rigidity. This is considered detrimental to the wearing experience of the consumer. Third, such a construction is awkward and scales ineffectively to mass-production techniques.

U.S. Pat. Nos. 4,956,040 and 5,073,222 describe a technique of laminating pre-made holographic labels between a polyester cover sheet and polyester adhesive scrim backing prior to affixing the multi-layered assembly to a fabric backing. In such assemblies the durability provided by the clear polyester cover and adhesive polyester scrim backing is poor. Further, the overall thickness of such a construct has the same detrimental effect to the hand of the fabric as described above.

U.S. Pat. Nos. 5,945,201 and 6,036,810 describe holographic identifying tags for use on garments. Specifically, a technique of attaching holographic foils utilizing a hotmelt adhesive applied to both the back surface of the hologram and the front surface of the fabric is detailed. Such a construction suffers from lack of integrity, especially at the periphery of the holographic foil component. An identifying tag so constructed relies upon the integrity of the holographic foil solely as there is no additional durability created as a result of the construction process. Holographic foils have been demonstrated to fail standard laundering and wear tests. Without further protective measures being taken they will deteriorate regardless of the technique used to affix them top a garment.

U.S. Pat. No. 5,407,729 describes a multiple-transfer method for applying light diffracting materials to fabric in selective patterns by way of applying a curable adhesive resin / plasticizer base (e.g. Plastisol, manufactured by International Coatings) in a selective pattern prior to overcoating with a heat-activated adhesive resin. This base then serves to adhere a light-diffracting layer of indeterminate construction. The process of multiple registered transfers between release layers, fabric, and top layers certainly does not lend itself to mass production techniques. Further, without specifying the constituent elements of the light diffracting top element, it would be difficult to successfully create a durable product by following the given specification.

U.S. Pat. No. 5,510,911 and 5,626,702 describe a similar but more straightforward technique than does U.S. Pat. No. 5,407,729. Again, a patterned application of a Plastisol-like adhesive is specified, to which a (preferably) PVC-based adhesive coated holographic foil is affixed with heat and pressure. The residual foil that falls outside the patterned Plastisol regions is removed, leaving behind foil in the desired pattern. Again, holographic foils have demonstrated poor resistance to the normal wear and laundry cycles typical to the garments considered. Without further means of protection the holographic microstructure and holographic foil substrate itself deteriorate with a concomitant decrease in diffraction efficiency.

U.S. Pat. Nos. 5,636,385 describes a technique that provides adequate - arguably too much - protection of the holographic image surface. A frame member is described that serves to house the holographic element, thereby sealing it between a front, optically clear window and a rear piece that can be affixed to a garment in a variety of ways. Three drawbacks of such a construction are its complexity, cost, and its very obvious presence on the garment. The look and feel of the garment is absolutely altered and applications are limited for such protrusive indicia.

U.S. Pat. Nos. 5,882,770 and 6,120,710 describe the direct embossing of thermoplastic organic polymer fabrics, In these specifications, there is no diffraction-enhancing metallization process described, nor is there any consideration of a protective top coating or layer that would prevent the "indexing out" of the holographic microstructure once it is imparted into the fabric. As such, a rather low efficiency holographic image is realized. The diffraction efficiency will further decrease as the microstructure becomes fouled with everyday contaminants and as normal wear distorts and abrades the unprotected diffraction grooves.

U.S. Pat. No. 6,156,412 describes a fabric that is little more than a description of a commonplace dielectric diffraction grating, the performance of which is controlled by the width and depth of the etched grooves on the face of the fabric. There is no mention of materials, construction technique, or protection of the microstructure in the specification of the patent.

U.S. Pat. No. 6,764,744 describes a composite fabric that includes a diffractive layer behind a first textile fabric layer, the latter exhibiting some degree of transmissivity, either via natural voids between the threads of the fabric, or by other means, such as through patterned holes. Although such a construction can be used to create a holographic fabric label, durability is questionable, and the visual interference of the first fabric layer with the underlying holographic layer is undesirable in most labeling applications, where clarity and distinctness are of importance.

### SUMMARY OF THE INVENTION

The present invention avoids the above-described limitations of the prior art through the use of a unique holographic label construct so as to provide exceptional durability, integrity, and brightness of image. The present invention provides an improved and novel holographic device that possesses durability, high intensity of holographic diffraction, laundering resistance, minimal alteration to the hand of the fabric, and ability to be cost-effectively mass produced. Preferably, the present invention comprises a thin profile, durable, inherently difficult to reproduce, and visually appealing holographic label that can be affixed to a wide array of textiles, wearing apparel, garments, and other consumer products.

In accordance with another aspect of the invention a security label is provided comprising:
a first layer having a diffractive structure formed therein;
a thermo adhesive second layer directly contacting, bonded to, and conforming to regions of the first layer having the hologram; and,
wherein the first layer and the thermoadhesive layer have a refractive index difference n > 0.1 so that visible diffractive effects can be seen from light diffracting from their interface.

In accordance with the present invention, generally there is provided a unique polymeric film, directly upon which a high quality radiation-cured holographic label is constructed. More specifically, an *in situ* radiation curable resin technique, as outlined in several patents including, for example, U.S. Pat. Nos.4,933,120; 5,003,915; 5,083,850; 5,085,514; and 5,116,548 (all five of the aforementioned patents being incorporated herein by reference) is used to apply a holographic layer directly to a polymeric film. A reflective layer is applied on the diffractive surface relief structure for visibility enhancement over at least one portion of the intended label. At the same time, there is at least one portion of the area is free of reflective layer where provide direct contact to the adhesive for fabric attachment. A unique aspect of the present invention is the unanticipated effectiveness of superior encapsulation and high bond between polymers that sustains multiple laundry washes and dry clean cycles. The full construct of the label is very thin and compliant; further more it can be produced in at cost effective manor which the above-cited prior art does not specify or anticipate on one embodiment.

In accordance with an aspect of the invention there is provided a security label comprising:
a first layer having a diffraction grating pattern formed therein;
a thermo adhesive second layer directly contacting, bonded to, and conforming to regions of the first layer having the diffraction grating pattern; and,
a reflective layer sandwiched between and contacting the first and second layers such that the reflective layer conforms to at least portions of the diffraction grating pattern and such that the reflective layer is encapsulated by the first and second layers.

A variety of materials and combinations of materials can be used for the carrier and the bottom fabric-adhesive layer of the construct. It has been found that use of thermoplastic materials provides advantages in both the manufacture of the construct and the adhesion of the construct to the fabric, as described in more detail below. The thermoplastic materials will accordingly have a softening or melting point that is mutally compatible, and that will allow adhesion of the top and bottom layers to the fabric without substantial decomposition of the fabric.

The carrier materials are also substantially transparent to ultraviolet (UV) light. While almost all organic compounds absorb some light in the UV region, i.e., about 400 nanometers to about 190 nanometers, the preferred polymers will have low or minimal absorption over all or a portion of this range.

A wide variety of polymer carriers we can use raging from non-amorphous, semi- amorphous to amorphous films that are substantially UV transparent polymers are known and include, for example, certain poly(methyl methacrylate)s (PMMA), poly(butyl methacrylate)s, silicones such as poly(dimethylsiloxane)s (PDMS), polyamides, poly(methylpentene), olefin copolymers such as norbornene-ethylene copolymers (commercially available under the trade name TOPAS® 8007 from Ticona), thermoplastic polyurethanes (TPU) (commericially available under the trade name Desmopan®, e.g., DP 9650DU, DP 9659DU, DP 9662DU and DP 9665DU available from Bayer MaterialScience AG), poly(styrene), hydrogenated poly(styrene), poly(para-xylylene) (commercially available under the trade name PARYLENE C), polyolefins such as polypropylene (PP) and high density polyethylene (HDPE), ethylene-propylene copolymers, polyester copolymer and polyesters such as poly(butylene terphthalate and poly(ethylene)terephthalate (commercially available under the trade name MYLAR® from DuPont).

The bottom polymeric adhesive film layer is preferably a thermal adhesive such as polyamide, polyurathane adhesive film that is typically within the range of about 0.5 to about 7.0 mils thick. The film gauge selection depends on at least 1) the base fabric density, fiber diameter, and fiber chemical structure, 2) the intended application of the final label construct, and 3) the bonding process parameters, including temperature, dwell, and pressure values throughout the bonding operation. An example of a thermal adhesive film useful in this invention is the polyamide, polyurethane and the like adhesive film available from Bemis Associates of Shirley, Massachusetts.

It has been demonstrated that the preferred polyamide adhesive films provide superior adhesion to a wide range of natural and synthetic fabric bases. The polyamide film partially penetrates the fabric base layer upon heating, effectively sealing the backside of the holographic element and providing a high degree of hydrolysis resistance. Further, polyamide adhesive film adheres exceptionally well to the radiation-cured holographic element. Thus, in accordance with a preferred embodiment of the instant invention, a hydrolysis resistant polyamide film layer is utilized that offers superior adhesive qualities and serves as at least one layer of a multiple layer holographic label. In addition to polyamide, polyurethane, polyester are also excellent choices depending on the fabric and applications.

Preferably, the radiation-cured holographic element is coated with a diffraction-enhancing layer, such as aluminum for example. For further variation of product appearance, an aluminum diffraction-enhancing layer can also be pattern metallized, as is described, for example, in U.S. Pat. Nos. 5,044,707; 5,128,779; 5,142,383; 5,145,212; and 5,411,296 (all four of the aforementioned patents being incorporated herein by reference) without adversely affecting the functionality of the instant invention.

Diffraction-enhancing layers are not limited to aluminum, and can take the form of other common materials used in the art including other metal oxides or refractive inorganic compounds such as titanium dioxide or zinc sulfide.

Subsequent to diffraction enhancing processes, such as metallization, the holographic element can be coated with a transparent radiation-curable topcoat (e.g. an ultraviolet curable topcoat), or other type of protective layer on its front face to improve its functional performance, durability, and affect other qualities such as gloss and slip.

### BRIEF DESCRIPTION OF THE DRAWINGS

The following detailed description, given by way of example, and not intended to limit the present invention solely thereto, will best be understood in conjunction with the accompanying drawings in which:

Fig. 1 is a cross section diagram of the construction of a typical holographic element;

Fig. 2 is a diagram of the same holographic element with a diffraction enhancing layer of aluminum applied to the microstructure side;

Fig. 3 is a diagram illustrating a diffractive structure partially covered with reflective layer applied to the diffraction enhancing layer;

Fig. 3A is a cross-sectional diagram illustrating one of the structures derived when using de-met method to achieve metal patterning by resist printing over metal protect the desired area prior to caustic wash which removes the reflective layer in areas that are not protected from the caustic wash by the resist printing.

Fig 4 is a diagram of the holographic element disposed upon a layer of thermo adhesive and a base fabric;

Fig. 4A is an illustration of the holographic element disposed upon multiple adhesive layers for best bond performance between hologram label and certain base fabric or material;

Fig. 4B is an illustration as shown in Fig. 4A with the carrier removed.

Fig 4C illustrates an embodiment wherein there is no encapsulated reflective layer and wherein diffraction comes from the diffractive index difference of the two layers conforming to the hologram.

Fig. 5 is a diagram of Figure 4 containing printing element therein.

Fig. 6 is a diagram of the construct of Fig. 5 with the addition of a RFID tag therein.

### DETAILED DESCRIPTIONS OF THE EMBODIMENTS

Reference should be made to the drawing figures, on which similar or identical elements are given consistent identifying numerals throughout the various figures thereof.

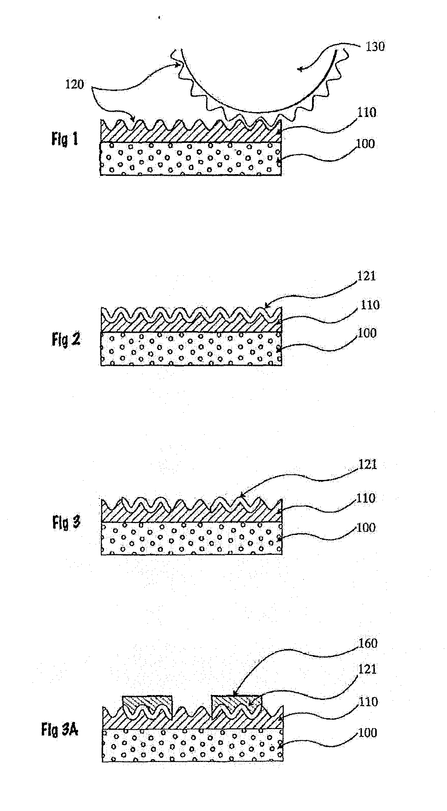

Fig. 1 illustrates a sectional view of a holographic element 10, typical of the instant invention. An adhesive film base substrate 100 has disposed thereon a layer of essentially transparent oligomeric resin 110 that is cured while in intimate contact with a holographic stamping tool 130. Layer 100 is composed of one or more of the polymerfilm. The holographic replicating tool 130 imparts a holographic microstructure pattern 120 to the oligomeric resin, creating a negative pattern 120 in the surface of the resin. Once the resin layer 110 has been cured and the holographic stamping tool 130 has been removed, the pattern 120 remains fixed in the top surface of said resin.

Fig. 2 illustrates holographic element 120, wherein a thin layer of a reflective material such as aluminum 121 has been affixed to the microstructure pattern. This serves to greatly increase the reflective and therefore, the diffractive properties of said microstructure. The aluminum can be demetallized in whole or in part as will be described later.

Fig. 3 illustrates holographic layer 110 is partially covered with reflective layer 121, wherein a reflective layer is disposed at selective areas. The selective areas can be one larger region or may comprise many smaller regions. The reflective layer 121 can be in the form of graphical pattern, logo or text for branding or batch purpose or other indicia. Fig 3A, illustrated resist 160 is left on the metal surface 121 after the demet process.

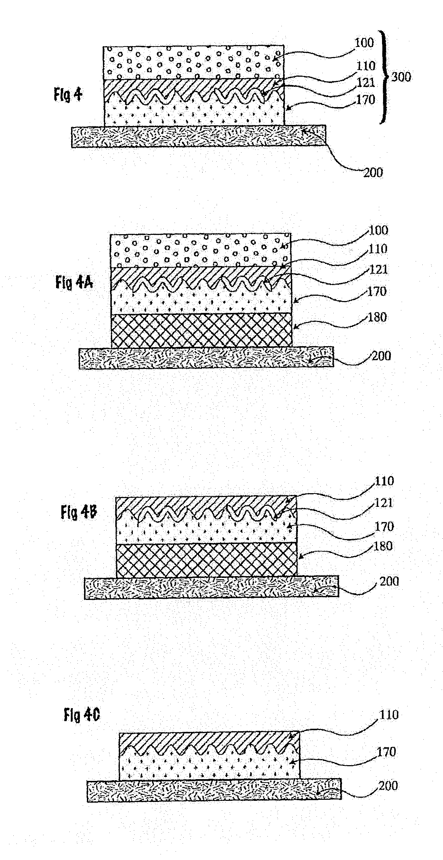

Fig. 4 illustrates holographic element 110 disposed upon a layer of thermo adhesive 170 and a base fabric 200; there is portion of hologram layer 110 there is free of reflective layer 121 has direct contact with thermo plastic adhesive 170, upon heat and pressure carrier 100, hologram layer 111 and adhesive 170 are bond together strongly, thus visual enhancement reflective layer 121 is sealed and well protected. It will be appreciated that the thermo adhesive of polyamide or other films 170 and upper surface of base fabric 200 have intermeshed as a result of sufficiently heating the thermoplastic film base substrate 170 while simultaneously applying downward pressure, urging the softened polymer against and into base fabric 200. Fig. 4A It is possible additional of thermoplastic adhesives 180 required to achieve the superior bond depending on substrate. The radiation-curable layer 110 and carrier layer 100 are not affected by the application of heat and pressure as they are not thermoplastic materials and therefore will not flow under such conditions. The holographic microstructure is therefore unaffected and remains bright and highly diffractive. And it endures multiple washing and dry clean. Fig. 4B is an illustration with carier 100 removed from the hologram layer 110. Removal of the carrier 100 yields a thinner structure than in Figs. 4 and 4A.

An alternative embodiment of the invention is shown in Fig. 4C. In this less preferred embodiment the reflective layer is not required. Visible diffraction from the holographic layer results from the hologram layer 110 and the adhesive layer 170 having a large enough refractive index difference therebetween. Although a refractive index difference of Δn= N 110-N 17a > |0.1| is sufficient for some visible diffraction it is preferable if the materials selected for the layer 110 and the layer 170 have a large enough refractive index difference so that considerable visible diffraction occurs.

Exemplary materials for the hologram layer 110 are Poly(α-naphthyl methacrylate) n=1.641, Poly(pentabromophenyl methacrylate) n=1.71, and Polypheoylenevinylene n= 2.1 @ 633nm. It should also be noted that the refractive index of polymer can be increased or decreased by appropriately doping the polymer.

Examplary materials for the adhesive layer 170 preferably have values of n between 1.45 to 1.55. For example typical plastics have a value of n in the range of 1.46 to 1.55. Polyamide has a refractive index of 1.53. Polyurethane has a value of n=1.6.

In the embodiment in Fig. 4C it is not required to have layer 100 present.

Holographic fabric labels of the present invention can be created on a first strip or sheet of fabric that is then cut into discrete holographic labels that are subsequently attached to a separate garment or piece of apparel. Alternatively, holographic fabric labels of the present invention can be directly applied, using heat and pressure, to a finished garment, apparel, or section thereof so as to create an autonomous label that is permanently bonded.

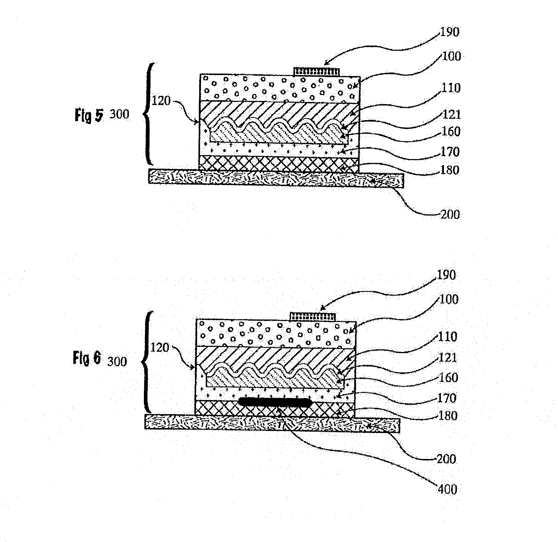

Fig. 5 illustrates a holographic label and incorporates printing 190 within or on top for additional branding, batching, numbering. The printing ink can be dyed, pigmented and/or tagged at a very specific area to be secure and cost effective.

Fig. 6 illustrates a holographic label 300 of the type disclosed in Fig. 5 with the addition of a radio frequency identification (RFID) tag 400. An RFID tag 400 is preferably a known passive tag, which includes an antenna and a CMOS integrated circuit. The insertion of a RFID tag within holographic label 300 adds yet another degree of security to the label.

In one embodiment, the forming of the hologram is not limited to the deposition of UV curable resin on the carrier prior to the deposition of the optically reflective layer on the micro structured surface, forming of the hologram is also done via embossing on a clear or metalized lacquer layer. De-metalized a fully metalized surface or pattern metallization is incorporated to the holographic label. The metallized layer or the de-metalized layer is produced as follows. First, a layer of metal is disposed upon the hologram. In one embodiment, the layer of metal may be a continuous layer deposited on the surface of the hologram and is thin enough so as not to reduce the flexible properties of the holographic label. On the other hand, it is generally desirable for the metal layer to be thick enough so that it is visible to the naked eye. The metalized layer or the demetalized layer is produced as follows.

The metal layer is about 20 to about 2,000 angstroms (Å) thick, specifically about 50 to about 1,000Å thick, more specifically about 100 to about 500Å thick, and more specifically about 150 to about 300Å thick. The metal layer may be deposited via chemical vapor deposition (CVD), expanding thermal plasma (ETP), ion plating, plasma enhanced chemical vapor deposition (PECVD), metal organic chemical vapor deposition (MOCVD) (also called organometallic chemical vapor deposition (OMCVD)), metal organic vapor phase epitaxy (MOVPE), physical vapor deposition processes such as sputtering, reactive electron beam (e-beam) deposition, and plasma spray. Exemplary processes are CVD and PECVD.

Examples of metals for use in the metal layer are copper, aluminum, chrome, or the like, or a combination comprising at least one of the foregoing metals.

Following the deposition of the metal on the hologram, a mask is placed upon a surface of the metal layer that is opposed to the surface in contact with the hologram. As noted above, it is desirable for the mask to have a positive image of the image desired on the multilayered device. In one embodiment, the mask may comprise paint, ink or varnish that is resistant to the etching process. The paint, ink or varnish may be applied to the metal surface by a printing device.

In another embodiment, the mask can comprise an organic polymer that is resistant to the etching process. In this embodiment, a pattern produced by two or more immiscible polymeric phases (such as one produced by a block copolymer) is first subjected to etching or degradation to remove one of the polymeric phases. The remaining phase forms a positive image of the pattern, which can then be used as a mask. Examples of such patterns are those available in alternating block copolymers, random block copolymers, star block copolymers, and the like. Features on the order of 20 to 200 Å are produced in the metal layer. These features can be periodic or aperiodic.

In yet another embodiment, the mask can comprise a ceramic or a metal that is resistant to the etching process. In a preferred embodiment, the mask comprises an ink that is resistant to the etching process.

The etching process can use a chemical etchant or a radiation based etchant. Examples of a suitable chemical etchant are basic solutions having a pH of about 8 to about 14. Examples of suitable basic solutions are those comprising sodium hydroxide, potassium hydroxide, ammonium hydroxide, or the like, or a combination comprising at least one of the foregoing basic solutions.

Acid solutions having a pH of less than 7 may also be used as etchants. In an exemplary embodiment, aluminum metal can be etched with an acid. Mild sulfuric acid can be used to etch a copper layer deposited upon a substrate.

In another embodiment, radiation based etchants can be used. For example, an ion beam can be used to selectively etch portions of the metal layer that are not covered by the mask. The metal layer may be partially or completely removed by the etching process to create the non-holographic image.

In one embodiment, in one manner of producing a metallized or demetallized security device, the hologram is coated with aluminum metal. A mask that comprises a positive image of the desired non-holographic image is disposed upon the surface of the metal that is opposed to the surface in contact with the hologram. After the deposition of the mask, the holographic label is placed in a tray containing a basic solution such as sodium hydroxide.

Although etching effect is practically immediate once the basic solution is applied to the metallized surface, it may be desirable to allow the solution to remain a certain amount of time in contact with the metallized surface so that the chemical reaction is completed in those areas in contact with the solution.

To stop the oxidizing effect of the solution, the metallized surface can be washed with a mild acid and/or with water (preferably non-recycled). For example, the metallized surface (previously printed) can be passed through a washing area where the residual sodium hydroxide and the oxidized metal (i.e., aluminum oxide) can be removed by washing with a mild acid. In an exemplary embodiment, the water will wet the entire printed area of the metallized surface. For example, fine sprinklers can be used to cover the entire printed area. In order to make the washing process more efficient and to completely remove the residuals of the chemical process, washing may be repeated one or more times using fresh water each time.

Before the multilayered device enters the drying station, it may be desirable to remove excess water from the metallized surface in order to facilitate the evaporation of and remaining residual water. In order to remove the water, it is recommendable to use a pair of rollers (e.g., one of rubber and another metallic), air cleaners, sponges and/or air sprinklers. Finally the metallized device is passed through the drying unit through for a heat dry (e.g., using electrical resistance heating) to completely remove the water from the material.

In one embodiment, an optically transparent protective layer (not shown) is disposed upon the hologram. The optically transparent protective layer generally comprises an organic polymer. The organic polymer used in the optically transparent protective layer may be selected from a wide variety of thermoplastic polymers, blend of thermoplastic polymers, thermosetting polymers, or blends of thermoplastic polymers with thermosetting polymers. The organic polymer may also be a blend of polymers, copolymers, terpolymers, or combinations comprising at least one of the foregoing organic polymers. The organic polymer can also be an oligomer, a homopolymer, a copolymer, a block copolymer, an alternating block copolymer, a random polymer, a random copolymer, a random block copolymer, a graft copolymer, a star block copolymer, a dendrimer, or the like, or a combination comprising at last one of the foregoing organic polymers. In one embodiment, it is generally desirable for the organic polymer used in the optically transparent protective layer to be transparent to ultraviolet radiation. In another embodiment, it is desirable for the organic polymer used in the optically transparent protective layer to not be transparent to ultraviolet light.

Examples of the organic polymer are polyacetals, polyolefins, polyacrylics, polycarbonates, polystyrenes, polyesters, polyamides, polyamideimides, polyarylates, polyarylsulfones, polyethersulfones, polyphenylene sulfides, polyvinyl chlorides, polysulfones, polyimides, polyetherimides, polytetrafluoroethylenes polyetherketones, polyether etherketones, polyether ketone ketones, polyacetals, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyethylene terephthalate, polybutylene terephthalate, polyurethane, ethylene propylene diene rubber (EPR), polytetrafluoroethylene, fluorinated ethylene propylene, perfluoroalkoxyethylene, polychlorotrifluoroethylene, polyvinylidene fluoride, or the like, or a combination comprising at least one of the foregoing organic polymers.

Examples of thermosetting polymers include polyurethane, natural rubber, phenolic, polyesters, polyamides, silicones, or the like, or a combination comprising at least one of the foregoing thermosetting polymers. Blends of thermosetting polymers as well as blends of thermoplastic polymers with thermosetting polymers can be utilized. An exemplary organic polymer that can be used as an optically transparent protective layer is a polyolefin, a polymethylmethacrylate, polycarbonate or a polyester that is transparent to ultraviolet radiation.

It is desirable for the optically transparent protective layer to have an optical transmissivity of greater than or equal to about 30%, specifically greater than or equal to about 50%, and more specifically greater than or equal to about 70%, and even more specifically greater than or equal to about 90%.

The present invention thus provides a durable holographic fabric label that can be permanently attached to apparel. By creating such an improved holographic label, value is realized on several levels: it is durable, inherently difficult to reproduce, and visually appealing. The present invention can be applied to the apparel as a stand-alone holographic device or can make use of the space otherwise used for a utilitarian manufacturer's specification label. In this latter embodiment the durable holographic label further serves as an information-bearing device. The present invention therefore provides an improved and novel process whereby a holographic label of exceptional durability is created and permanently affixed to an article of value. The present invention further provides an improved holographic label that is specifically suited for direct application to an article of clothing and provides a method of manufacture that allows cost-effective reproduction and application of such a label. In addition, the present invention provides a label surface capable of a wide range of gloss values via deliberate selection of component film layer thickness.

The holographic label need not be used solely as a label. It can be made into a wide web, a large flat format that may be used on garments, hand bags, specialty items, or the like. It can also be used as advertising material or decorative materials.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, and composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A security label comprising:
a first layer having a diffraction grating pattern formed therein;
a thermo adhesive second layer directly contacting, conforming to, and bonded to regions of the first layer having the diffraction grating pattern; and,
a reflective layer sandwiched between and contacting the first and second layers such that the reflective layer conforms to at least portions of the diffraction grating pattern and such that the reflective layer is encapsulated by the first and second layers.

2. A security label as defined in claim 1, wherein the bond between the first and second layer is stronger than a bond between the reflective layer and either of the first and second layers.

3. A security label as defined in claim 1 wherein the first layer is a radiation curable material.

4. A security label as defined in claim 1 wherein the diffraction grating pattern is a hologram and wherein the first layer is substantially light transmissive.

5. A security label as defined in claim 3 wherein the reflective layer is a patterned layer having regions of reflective material encapsulated by the first and second layers, and wherein an outwardly facing face of the first layer is planar and an outwardly facing face of the second layer is planar, and wherein at least regions of inwardly facing faces of the first and second layers are non-planar taking the form of the diffraction grating pattern.

6. A security label as defined in claim 5 including a polymer based carrier substantially transparent to UV light for supporting the first layer and wherein the thermo-adhesive second layer is a layer of thermoplastic suitable for fabric attachment.

7. A security label as defined in claim 5 wherein the first layer having the diffraction grating pattern formed therein is comprised of an oligomeric resin.

8. A security label as defined in claim 5, wherein the reflective patterned layer is in the form of text or a logo.

9. The security label of claim 6 wherein the polymer based carrier is a layer of one of poly(methyl methacrylate)s, poly(butyl methacrylate)s, silicones, poly(methylpentene), olefin copolymers, thermoplastic polyurethanes (TPU), poly(styrene), hydrogenated poly(styrene), poly(para-xylylene), polyolefin, ethylene-propylene copolymers, polyester copolymer and polyesters as well as mixtures thereof.

10. A security label as defined in claim 1 wherein the thermoplastic adhesive layer comprises polyamide, polyurethane, or polyester.

11. A security label of claim 10, wherein the thermoplastic adhesive layer has a thickness of between about 0.5 and 7.0 mils.

12. The security label of claim 1 wherein the thermoplastic adhesive layer is bonded under heat and pressure to a textile layer such that said label is partially embedded into said textile layer.

13. The security label of claim 1 including a color shift pigment within or upon one of the layers.

14. The security label of claim 1 including a covert taggent.

15. The security label of claim 16 including an RFID within or upon said label.

16. The use of a security label as defined in claim 1 for affixing to a garment, a handbag, a security enclosure, clothing, shoes, or a specialty item.

17. The security label of claim 4, wherein the hologram is embossed into the first layer.

18. A security label comprising:
a first layer having a diffractive structure formed therein;
a thermo adhesive second layer directly contacting, bonded to, and conforming to regions of the first layer having the hologram; and,
wherein the first layer and the thermoadhesive layer have a refractive index difference n > 0.1 so that visible diffractive effects can be seen from light diffracting from their interface.

19. A security label as defined in claim 18 further comprising a reflective layer disposed between and encapsulated by the first layer and the second layer.
